# EUROPEAN PATENT APPLICATION

(11) **EP 4 787 546 A1**
(43) Date of publication of application: **05.08.2026**
(21) Application number: 24870324.1
(22) Date of filing: 30.08.2024
(51) Int. Cl.: H01M 10/617, H01M 10/6556, H01M 10/6554, H01M 10/6568

(54) **TEMPERATURE ADJUSTMENT PLATE, BATTERY PACK, AND ELECTRICAL DEVICE**

(30) Priority: 25.09.2023 CN 202322610864 U
(71) Applicant: BYD Company Limited, Shenzhen, Guangdong 518118 (CN)
(72) Inventor: ZHONG, Rijun, Shenzhen, Guangdong 518118 (CN); CAI, Yaomin, Shenzhen, Guangdong 518118 (CN); PENG, Qingbo, Shenzhen, Guangdong 518118 (CN); LU, Zhipei, Shenzhen, Guangdong 518118 (CN); SUN, Huajun, Shenzhen, Guangdong 518118 (CN)
(74) Representative: Mathys & Squire
(86) International application number: PCT/CN2024/115759
(87) International publication number: WO 2025/066778

(57) **Abstract**

A temperature regulating plate, a battery pack, and an electric device are provided. The temperature regulating plate includes a body. The body is provided with a plurality of first heat exchange regions configured to cooperate with different heat-generating regions of a battery module. The body is provided with a first flow channel. The first flow channel is configured to circulate a heat exchange medium. The first flow channel includes a plurality of first heat exchange sections and at least one first transition section, where the first heat exchange sections are disposed in the first heat exchange regions, and the first transition section is disposed between the first heat exchange sections of two adjacent first heat exchange regions to connect the first heat exchange sections. A flow area of the first heat exchange section in any first heat exchange region is greater than a flow area of any first transition section.

## Description

### CROSS-REFERENCE TO RELATED APPLICATIONS

This application is based on Chinese Patent Application No. 202322610864.2, filed on September 25, 2023, and claims priority to the foregoing Chinese Patent Application, which is incorporated herein by reference in its entirety.

### TECHNICAL FIELD

This application belongs to the field of battery technologies, and in particular, to a temperature regulating plate, a battery pack, and an electric device.

### BACKGROUND

Temperature is a crucial factor affecting battery performance and lifespan. An existing vehicle battery pack generates heat during charging and discharging. Therefore, a heat exchange plate is usually disposed in the battery pack, and the temperature of the battery pack is regulated through the heat exchange plate. A battery pack typically includes a battery module, and the battery module has different heat-generating regions during charging and discharging. However, a heat exchange channel of an existing heat exchange plate has the same cooling effect on different regions. This results in energy waste in a heat-generating region with a low cooling demand. Moreover, a large amount of heat exchange medium needs to be injected, and heat dissipation cannot be concentrated in a region with a high cooling demand. Consequently, a considerable amount of energy needs to be consumed for reducing a severely heated region of the battery module to a specified temperature.

### SUMMARY

This application is intended to resolve one of technical problems in a related technology to at least some extent.

To this end, an objective of this application is to provide a temperature regulating plate.

Another objective of this application is to provide a battery pack.

Another objective of this application is to provide an electric device.

According to a first aspect of this application, a temperature regulating plate is provided, including a body, wherein the body is provided with a plurality of first heat exchange regions configured to cooperate with different heat-generating regions of a battery module, the body being provided with a first flow channel, the first flow channel being configured to circulate a heat exchange medium, the first flow channel including a plurality of first heat exchange sections and at least one first transition section, the first heat exchange sections being disposed in the first heat exchange regions, and the first transition section being disposed between the first heat exchange sections of two adjacent first heat exchange regions to communicate with the first heat exchange sections, and a flow area of the first heat exchange section in any first heat exchange region being greater than a flow area of any first transition section.

According to the temperature regulating plate of this application, through arrangement of the first heat exchange sections and the first transition section, the first transition section can communicate with two adjacent first heat exchange sections, and the flow area of the first heat exchange section is greater than the flow area of the first transition section, so that injection of the heat exchange medium can be reduced and energy waste can be effectively reduced when the heat exchange medium passes through the first transition section, and therefore energy of the heat exchange medium in the first flow channel can be concentrated in the first heat exchange regions to exchange heat with the battery module, energy consumption of the temperature regulating plate is effectively reduced, and use costs are lowered.

According to a second aspect of this application, a battery pack is provided. The battery pack includes: the foregoing temperature regulating plate; and a battery module, wherein the plurality of first heat exchange regions cooperate with different heat-generating regions of the battery module.

The battery pack according to this application includes the temperature regulating plate and the battery module, and the plurality of first heat exchange regions of the temperature regulating plate respectively cooperate with the different heat-generating regions of the battery module. Because the temperature regulating plate according to embodiments of this application can resolve the technical problem of high energy consumption of existing temperature regulating plates, the battery pack of this application also has the foregoing advantage, which can reduce the injection amount of the heat exchange medium, effectively reducing energy consumption, and lowering use costs.

According to a third aspect of this application, an electric device is provided. The electric device includes the foregoing temperature regulating plate, or the foregoing battery pack.

According to the electric device of this application, the electric device includes the temperature regulating plate, or the battery pack. Because both the temperature regulating plate and the battery pack can resolve the technical problem of high energy consumption of the existing temperature regulating plates, the electric device of this application also has the foregoing advantage, which can reduce the injection amount of the heat exchange medium, effectively reducing energy consumption, and lowering use costs.

Additional aspects and advantages of this application are set forth in part in the following description, and in part become apparent from the following description, or may be learned through the practice of this application.

### BRIEF DESCRIPTION OF DRAWINGS

FIG. 1 is a diagram of distribution of heat-generating regions of a battery module of a battery pack according to an embodiment of this application;
FIG. 2 is a diagram of an overall structure of a temperature regulating plate according to an embodiment of this application;
FIG. 3 is a diagram of a structure of a first flow channel of a temperature regulating plate according to an embodiment of this application;
FIG. 4 is a diagram of a structure of a second flow channel of a temperature regulating plate according to an embodiment of this application;
FIG. 5 is a partial cross-sectional view of a structure of a temperature regulating plate according to an embodiment of this application;
FIG. 6 is a diagram of a structure of a battery pack according to an embodiment of this application;
FIG. 7 is a diagram of an electric device according to an embodiment of this application; and
FIG. 8 is a diagram of an electric device according to another embodiment of this application.

### DESCRIPTION OF EMBODIMENTS

Various exemplary embodiments of this application will now be described in detail with reference to the accompanying drawings. It will be noted that, unless otherwise specifically stated, relative arrangements, numerical expressions, and numerical values of components and steps set forth in these embodiments do not limit the scope of this application.

The following description of at least one exemplary embodiment is merely illustrative and is in no way intended to limit this application and its application or use.

Technologies, methods, and devices known to person of ordinary skill in the relevant art may not be discussed in detail. But in proper cases, the technologies, methods, and devices will be considered as part of the specification.

In all examples shown and discussed herein, any specific value will be interpreted as merely exemplary and not as limitations. Therefore, other examples of exemplary embodiments may have different values.

It will be noted that similar reference numerals and letters indicate similar items in the following accompany drawings. Therefore, once an item is defined in one figure, the item does not need to be further discussed in subsequent figures.

A temperature regulating plate 10 according to an embodiment of this application is described in detail below with reference to the accompanying drawings.

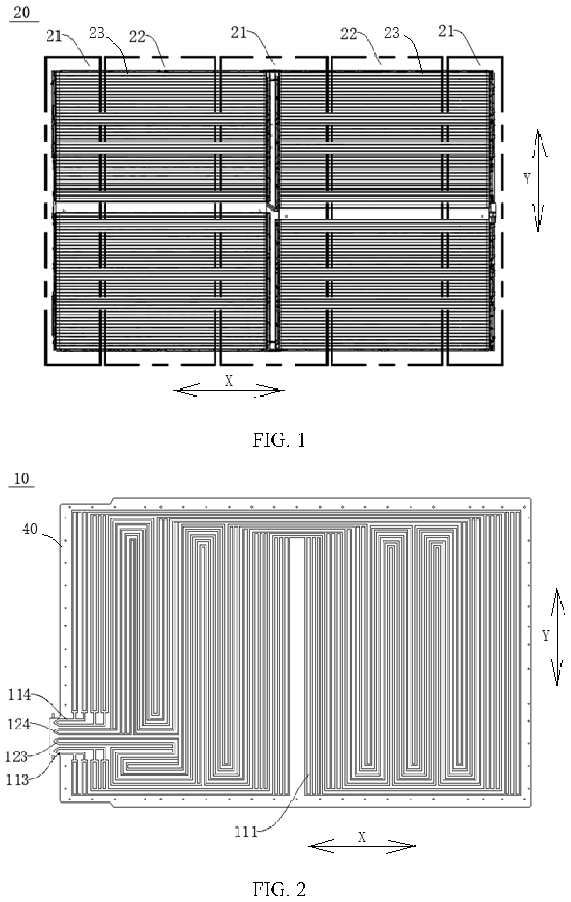

As shown in FIG. 1 to FIG. 5, a temperature regulating plate 10 according to an embodiment of this application includes a body 40.

Specifically, the body 40 is provided with a plurality of first heat exchange regions configured to cooperate with different heat-generating regions of a battery module 20. The body 40 is provided with a first flow channel 11. The first flow channel 11 is configured to circulate a heat exchange medium. The first flow channel 11 includes a plurality of first heat exchange sections 111 and at least one first transition section 112, where the first heat exchange sections 111 are disposed in the first heat exchange regions, and the first transition section 112 is disposed between the first heat exchange sections 111 of two adjacent first heat exchange regions to communicate with the first heat exchange sections 111. A flow area of the first heat exchange section 111 in any first heat exchange region is greater than a flow area of any first transition section 112.

In other words, as shown in FIG. 1 to FIG. 5, according to the temperature regulating plate 10 of this embodiment of this application, the temperature regulating plate 10 is mainly configured to regulate a temperature of the battery module 20 of the battery pack 100. Positive and negative terminals are generally disposed at two ends of the battery module 20 in a first direction X. Therefore, during charging and discharging of the battery module 20, regions at two ends of the battery module 20 in the first direction X and a terminal post body 40 are heated severely, so that two heat-generating regions (namely high heat-generating regions 21) with different positions are formed in the regions at the two ends of the battery module 20 in the first direction X. It will be noted that the temperature regulating plate 10 may regulate a temperature of one battery module 20 of the battery pack 100, or may regulate temperatures of a plurality of battery modules 20 of the battery pack 100. The following is a specific explanation using one battery module 20 as an example.

As shown in FIG. 1 to FIG. 3, the temperature regulating plate 10 mainly includes a body 40. The body 40 is provided with two first heat exchange regions configured to cooperate with two high heat-generating regions 21 of the battery module 20. The body 40 is provided with a first flow channel 11 configured to circulate a heat exchange medium. The heat exchange medium can be provided for the first flow channel 11 through an air conditioning system of a vehicle. The first flow channel 11 includes two first heat exchange sections 111 and a first transition section 112, wherein the two first heat exchange sections 111 are respectively disposed in different first heat exchange regions, and the first transition section 112 is located between the two first heat exchange sections 111. In addition, a first liquid inlet section 113 is connected to a first end of one first heat exchange section 111, and the first liquid inlet section 113 is provided with a first liquid inlet, to allow the heat exchange medium to flow into the first heat exchange section 111. A second end of one first heat exchange section 111 is connected to a first end of the first transition section 112, and a second end of the first transition section 112 is connected to a first end of the other first heat exchange section 111, to communicate with the two first heat exchange sections 111. A first liquid outlet section 114 is connected to a second end of the other first heat exchange section 111, and the first liquid outlet section 114 is provided with a first liquid outlet, to allow the heat exchange medium to flow out of the first heat exchange section 111. Moreover, a flow area of the first heat exchange section 111 in each first heat exchange region is greater than a flow area of the first transition section 112, so that a volume of the first flow channel 11 is reduced, and an injection amount of the heat exchange medium can be reduced. When the injection amount of the heat exchange medium is constant, reducing the volume of the first flow channel 11 can increase an amount of the heat exchange medium per unit volume, thereby increasing a heat exchange amount of the first flow channel 11, and removing more heat of the battery module 20. In addition, a speed at which the heat exchange medium flows through the first transition section 112 is higher than a speed at which the heat exchange medium flows through the first heat exchange section 111, so that energy waste can be effectively reduced when the heat exchange medium passes through the first transition section 112.

Therefore, according to the temperature regulating plate 10 of this application, through arrangement of the first heat exchange sections 111 and the first transition section 112, the first transition section 112 can communicate with two adjacent first heat exchange sections 111, and the flow area of the first heat exchange section 111 is greater than the flow area of the first transition section 112, so that injection of the heat exchange medium can be reduced and energy waste can be effectively reduced when the heat exchange medium passes through the first transition section 112, and therefore energy of the heat exchange medium in the first flow channel 11 can be concentrated in the first heat exchange regions to exchange heat with the battery module 20, energy consumption of the temperature regulating plate 10 is effectively reduced, and use costs are lowered.

In some implementations of this application, the first heat exchange section 111 includes: a plurality of first heat exchange sub-sections 111a. The first heat exchange sub-sections 111a of two adjacent first heat exchange regions are in communication through the first transition section 112, and a total flow area of the plurality of first heat exchange sub-sections 111a in any first heat exchange region is greater than a flow area of any first transition section 112.

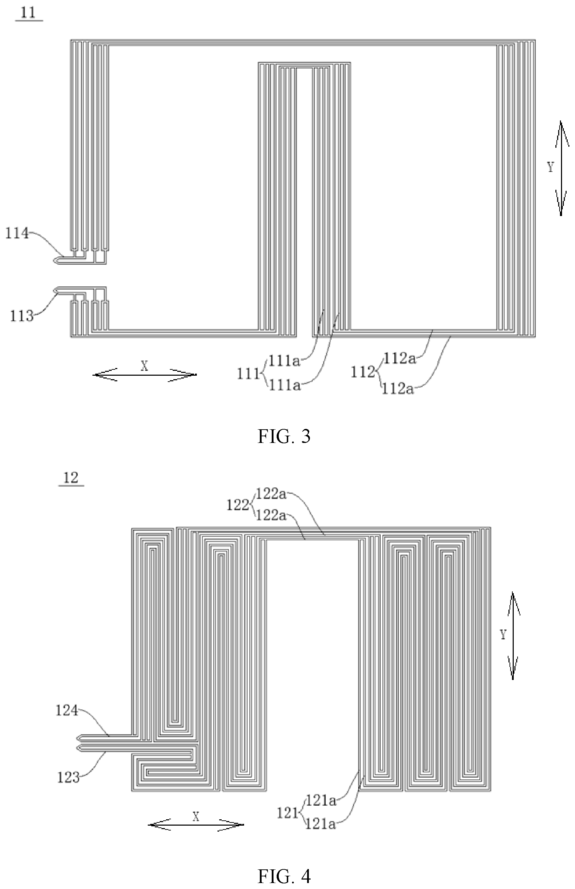

In other words, as shown in FIG. 3, the first heat exchange section 111 may be composed of the plurality of first heat exchange sub-sections 111a, and the first heat exchange sub-sections 111a of two adjacent first heat exchange regions are in communication through the first transition section 112. In this embodiment, a relationship between the flow area of the plurality of first heat exchange sub-sections 111a in each first heat exchange region and the flow area of the first transition section 112 includes, but is not limited to, the following cases.

Case 1: the flow area of at least one first heat exchange sub-section 111a is not less than the flow area of the first transition section 112, so that the total flow area of the plurality of first heat exchange sub-sections 111a in each first heat exchange region is greater than the flow area of the first transition section 112.

Case 2: the flow area of each first heat exchange sub-section 111a is equal to the flow area of the first transition section 112, so that the total flow area of the plurality of first heat exchange sub-sections 111a in each first heat exchange region is greater than the flow area of the first transition section 112.

Therefore, according to the temperature regulating plate 10 of this application, the energy of the heat exchange medium in the first flow channel 11 can be concentrated in the first heat exchange regions to exchange heat with the battery module 20, which can avoid wasting the energy of the heat exchange medium.

According to an embodiment of this application, the first transition section 112 includes: a plurality of first transition sub-sections 112a. The first heat exchange sections 111 of two adjacent first heat exchange regions are in communication through the plurality of first transition sub-sections 112a. The flow area of the first heat exchange section 111 in any first heat exchange region is greater than a total flow area of the plurality of first transition sub-sections 112a.

Specifically, as shown in FIG. 3, the first transition section 112 may be composed of the plurality of first transition sub-sections 112a, and the first heat exchange sections 111 of two adjacent first heat exchange regions are in communication through the plurality of first transition sub-sections 112a. When a quantity of the first transition sub-sections 112a in the first transition section 112 is the same as a quantity of the first heat exchange sub-sections 111a in the first heat exchange section 111, one end of one first transition sub-section 112a is connected to one first heat exchange sub-section 111a, and the flow area of each first heat exchange sub-section 111a is greater than a flow area of any first transition sub-section 112a, so that the flow area of the first heat exchange section 111 is greater than a total flow area of the plurality of first transition sub-sections 112a. When the quantity of the first transition sub-sections 112a in the first transition section 112 is less than the quantity of the first heat exchange sub-sections 111a in the first heat exchange section 111, one end of one first transition sub-section 112a may be connected to a plurality of first heat exchange sub-sections 111a, and the flow area of each first heat exchange sub-section 111a may be equal to the flow area of any first transition sub-section 112a, so that the flow area of the first heat exchange section 111 is greater than the total flow area of the plurality of first transition sub-sections 112a.

Therefore, according to the temperature regulating plate 10 of this application, the energy of the heat exchange medium in the first flow channel 11 can be concentrated in the first heat exchange regions to exchange heat with the battery module 20, which can avoid wasting the energy of the heat exchange medium.

In some implementations of this application, spacing between two adjacent first transition sub-sections 112a is less than spacing between two adjacent first heat exchange sub-sections 111a; and/or the quantity of the first transition sub-sections 112a is less than the quantity of the first heat exchange sub-sections 111a.

In other words, as shown in FIG. 3, the spacing between two adjacent first transition sub-sections 112a may be the same, and the spacing between two adjacent first heat exchange sub-sections 111a may also be the same. In addition, the spacing between two adjacent first transition sub-sections 112a may be less than the spacing between two adjacent first heat exchange sub-sections 111a, so that the heat exchange medium has a small energy loss when flowing through the first transition sub-section 112a. Therefore, the energy of the heat exchange medium in the first flow channel 11 can be concentrated in the first heat exchange regions to exchange heat with the battery module 20, which can avoid wasting the energy of the heat exchange medium can be avoided.

Optionally, as shown in FIG. 3, the quantity of the first transition sub-sections 112a in one first transition section 112 may be less than the quantity of the first heat exchange sub-sections 111a in one first heat exchange section 111. In this embodiment, a flow area of the first transition sub-section 112a is the same as a flow area of the first heat exchange sub-section 111a, and one end of one first transition sub-section 112a is connected to a plurality of first heat exchange sub-sections 111a.

According to an embodiment of this application, the body 40 is provided with a second heat exchange region configured to cooperate with different heat-generating regions of the battery module 20. The second heat exchange region is located between two adjacent first heat exchange regions. The body 40 is provided with a second flow channel 12. The second flow channel 12 is configured to circulate the heat exchange medium. The second flow channel 12 includes a second heat exchange section 121. The second heat exchange section 121 is disposed in the second heat exchange region.

In other words, as shown in FIG. 1 to FIG. 4, during charging and discharging of the battery module 20, a middle region of the battery module 20 in the first direction X is also a heat-generating region (namely a low heat-generating region 22). Because a heat generation amount of the low heat-generating region 22 is lower than a heat generation amount of the high heat-generating region 21, to ensure temperature uniformity of the battery module 20, the low heat-generating region 22 and the high heat-generating region 21 of the battery module 20 need to be cooled independently. Based on this, the body 40 is provided with a second heat exchange region configured to cooperate with the low heat-generating region 22. The second heat exchange region is located between two adjacent first heat exchange regions. The body 40 is provided with a second flow channel 12 configured to path the heat exchange medium. The second flow channel 12 includes a second heat exchange section 121 disposed in the second heat exchange region. Through the second heat exchange section 121, heat can be exchanged with the low heat-generating region 22 of the battery module 20 in the second heat exchange region, ensuring temperature uniformity of the battery module 20.

In this embodiment, the heat exchange medium used in the first flow channel 11 and the second flow channel 12 may be provided by the air conditioning system of the vehicle. The heat exchange medium can be heated or cooled by the air conditioning system of the vehicle. The air conditioning system can control a flow rate of the heat exchange medium entering the first flow channel 11 and the second flow channel 12, which facilitates controlling the first flow channel 11 and the second flow channel 12 to heat or cool the battery module 20. Through arrangement of the two flow channels, a problem of poor heat exchange effect at ends of the flow channels due to excessive length can be effectively avoided. Moreover, for the air conditioning system of the vehicle, the injection amount of the heat exchange medium (refrigerant) is smaller, which not only saves costs but also improves a COP of the air conditioning system and facilitates operation of the air conditioning system.

For example, when the battery pack 100 is discharged in a low-temperature environment, the first flow channel 11 and/or the second flow channel 12 can be used to heat the battery module 20 according to actual needs, to improve performance of the battery pack 100 and increase range of the battery pack 100. When the battery pack 100 is charged or discharged in a high-temperature environment, the first flow channel 11 and/or the second flow channel 12 can be used to cool the battery module 20 according to actual needs, to independently adjust temperatures of different regions of the battery module 20, which can effectively avoid uneven temperature distribution of the battery module 20 and effectively improve service life of the battery pack 100.

For example, when the battery pack 100 is charged at a high rate or discharged at high power, the heat-generating regions of the battery module 20 have significant differences. A flow rate of the heat exchange medium can be preferentially allocated to the first flow channel 11 to prioritize reducing the temperature of the high heat-generating region 21. Only a small amount of heat exchange medium needs to be allocated to the second flow channel 12. Once the temperature of the high heat-generating region 21 is reduced, the flow rate of the first flow channel 11 can be reduced, and the flow rate of the second flow channel 12 can result in less or no allocation of the heat exchange medium.

In some implementations of this application, the body 40 is provided with a plurality of second heat exchange regions. The first heat exchange region separates adjacent second heat exchange regions. The second flow channel 12 includes a plurality of second heat exchange sections 121 and at least one second transition section 122, where the second transition section 122 is disposed between the second heat exchange sections 121 of two adjacent second heat exchange regions to communicate with the second heat exchange sections 121, and a flow area of the second heat exchange section 121 in any second heat exchange region is greater than a flow area of any second transition section 122.

Specifically, as shown in FIG. 1 to FIG. 4, when the battery pack 100 is provided with a plurality of battery modules 20 arranged in the first direction X, the body 40 may be provided with a plurality of second heat exchange regions. The first heat exchange region separates two adjacent second heat exchange regions, so that the plurality of second heat exchange regions one-to-one correspond to low heat exchange regions of the plurality of battery modules 20. The following is a specific explanation using two second heat exchange regions as an example.

As shown in FIG. 4, the second flow channel 12 includes two second heat exchange sections 121 and one second transition section 122, where the two second heat exchange sections 121 are respectively disposed in different second heat exchange regions, and the second transition section 122 is located between the two second heat exchange sections 121. In addition, a second liquid inlet section 123 is connected to a first end of one second heat exchange section 121, and the second liquid inlet section 123 is provided with a second liquid inlet, to allow the heat exchange medium to flow into the second heat exchange section 121. A second end of one second heat exchange section 121 is connected to a first end of the second transition section 122, and a second end of the second transition section 122 is connected to a first end of the other second heat exchange section 121, to communicate with the two second heat exchange sections 121. A second liquid outlet section 124 is connected to a second end of the other second heat exchange section 121, and the second liquid outlet section 124 is provided with a second liquid outlet, to allow the heat exchange medium to flow out of the second heat exchange section 121. Moreover, the flow area of the second heat exchange section 121 in each second heat exchange region is greater than the flow area of the second transition section 122, so that a volume of the second flow channel 12 is reduced, which can reduce the injection amount of the heat exchange medium. When the injection amount of the heat exchange medium is constant, reducing the volume of the second flow channel 12 can increase the amount of the heat exchange medium per unit volume, thereby increasing the heat exchange amount of the second flow channel 12, and removing more heat of the battery module 20. In addition, a speed at which the heat exchange medium flows through the second transition section 122 is higher than a speed at which the heat exchange medium flows path the second heat exchange section 121, so that energy waste can be effectively avoided when the heat exchange medium flows through the second transition section 122, and therefore the energy of the heat exchange medium of the second flow channel 12 can be concentrated in the second heat exchange regions to exchange heat with the battery module 20.

In some examples of this application, the first transition section 112 and the second transition section 122 are respectively formed as flow channels extending in the first direction X. Compared with other extending configurations, a path of the heat exchange medium flowing through the first transition section 112 and the second transition section 122 can be shortened, and waste of the energy of the heat exchange medium can be effectively reduced.

According to an embodiment of this application, the second heat exchange section 121 includes: a plurality of second heat exchange sub-sections 121a. The second heat exchange sub-sections 121a of two adjacent second heat exchange regions are in communication through a second transition section 122, and a total flow area of the plurality of second heat exchange sub-sections 121a in any second heat exchange region is greater than the flow area of any second transition section 122.

In other words, as shown in FIG. 4, the second heat exchange section 121 may be composed of a plurality of second heat exchange sub-sections 121a, and the second heat exchange sub-sections 121a of two adjacent second heat exchange regions are in communication through the second transition section 122. In this embodiment, a relationship between the flow area of the plurality of second heat exchange sub-sections 121a in each second heat exchange region and the flow area of the second transition section 122 includes, but is not limited to, the following cases.

Case 1: the flow area of at least one second heat exchange sub-section 121a is not less than the flow area of the second transition section 122, so that the total flow area of the plurality of second heat exchange sub-sections 121a in each second heat exchange region is greater than the flow area of the second transition section 122.

Case 2: the flow area of each second heat exchange sub-section 121a is equal to the flow area of the second transition section 122, so that the total flow area of the plurality of second heat exchange sub-sections 121a in each second heat exchange region is greater than the flow area of the second transition section 122.

Therefore, according to the temperature regulating plate 10 of this application, the energy of the heat exchange medium in the second flow channel 12 can be concentrated in the second heat exchange regions to exchange heat with the battery module 20, which can avoid wasting the energy of the heat exchange medium.

In some specific implementations of this application, the second transition section 122 includes: a plurality of second transition sub-sections 122a. The second heat exchange sections 121 of two adjacent second heat exchange regions are in communication through the plurality of second transition sub-sections 122a. The flow area of the second heat exchange section 121 in any second heat exchange region is greater than a total flow area of the plurality of second transition sub-sections 122a.

Specifically, as shown in FIG. 4, the second transition section 122 may be composed of the plurality of second transition sub-sections 122a, and the second heat exchange sections 121 of two adjacent second heat exchange regions are in communication through the plurality of second transition sub-sections 122a. When a quantity of the second transition sub-sections 122a in the second transition section 122 is the same as a quantity of the second heat exchange sub-sections 121a in the second heat exchange section 121, one end of one second transition sub-section 122a is connected to one second heat exchange sub-section 121a, and the flow area of each second heat exchange sub-section 121a is greater than the flow area of any second transition sub-section 122a, so that the flow area of the second heat exchange section 121 is greater than the total flow area of the plurality of second transition sub-sections 122a. When the quantity of the second transition sub-sections 122a in the second transition section 122 is less than the quantity of the second heat exchange sub-sections 121a in the second heat exchange section 121, one end of one second transition sub-section 122a may be connected to a plurality of second heat exchange sub-sections 121a, and the flow area of each second heat exchange sub-section 121a may be equal to the flow area of any second transition sub-section 122a, so that the flow area of the second heat exchange section 121 is greater than the total flow area of the second transition sub-sections 122a.

Therefore, according to the temperature regulating plate 10 of this application, the energy of the heat exchange medium in the second flow channel 12 can be concentrated in the second heat exchange regions to exchange heat with the battery module 20, which can avoid wasting the energy of the heat exchange medium.

According to an embodiment of this application, spacing between two adjacent second transition sub-sections 122a is less than spacing between two adjacent second heat exchange sub-sections 121a; and/or a quantity of the second transition sub-sections 122a is less than a quantity of the second heat exchange sub-sections 121a.

In other words, as shown in FIG. 4, the spacing between two adjacent second transition sub-sections 122a may be the same, and the spacing between two adjacent second heat exchange sub-sections 121a may also be the same. In addition, the spacing between two adjacent second transition sub-sections 122a may be less than the spacing between two adjacent second heat exchange sub-sections 121a, so that the heat exchange medium has a small energy loss when flowing through the second transition sub-section 122a. Therefore, the energy of the heat exchange medium in the second flow channel 12 can be concentrated in the second heat exchange regions to exchange heat with the battery module 20, which avoids wasting the energy of the heat exchange medium.

Optionally, as shown in FIG. 4, a quantity of the second transition sub-sections 122a in one second transition section 122 may be less than a quantity of the second heat exchange sub-sections 121a in one second heat exchange section 121. In this embodiment, a flow area of the second transition sub-section 122a is the same as a flow area of the second heat exchange sub-section 121a, and one end of one second transition sub-section 122a is connected to a plurality of second heat exchange sub-sections 121a.

In some implementations of this application, the body 40 includes: a first plate body 13; and a second plate body (14). A side of the second plate body 14 is provided with a groove. The second plate body 14 is disposed on the first plate body 13. The groove cooperates with the first plate body 13 to define the first flow channel 11 and the second flow channel 12.

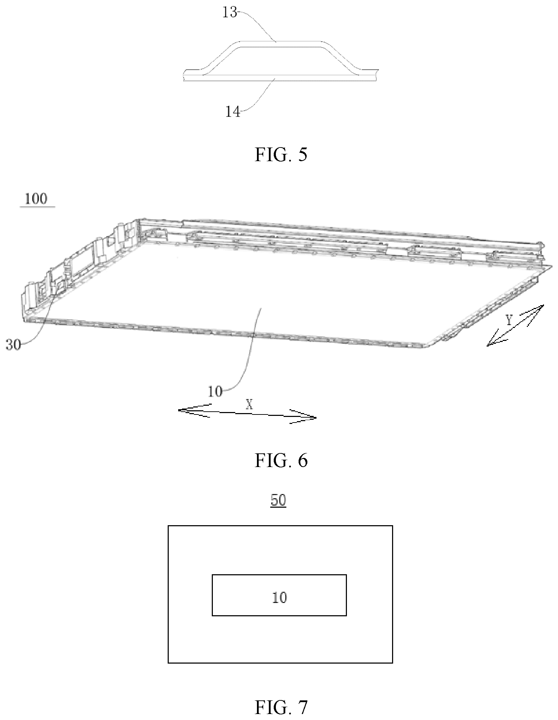

Specifically, as shown in FIG. 5, the temperature regulating plate 10 is mainly composed of the first plate body 13 and the second plate body 14. The second plate body 14 may be a stamped part. A groove is stamped on a side of the second plate body 14. A cross-section of the groove may be of a trapezoidal structure. A path of the groove is the same as a path of the first flow channel 11 and a path of the second flow channel 12. The groove faces the first plate body 13, and the second plate body 14 is welded to the first plate body 13, so that the groove and the first plate body 13 cooperate to define the first flow channel 11 and the second flow channel 12. In addition, the first plate body 13 and the second plate body 14 are welded together, while satisfying that the first flow channel 11 and the second flow channel 12 are not in communication.

In this embodiment, the temperature regulating plate 10 is composed of the first plate body 13 and the second plate body 14 connected together, which has a simple structure and is easy to manufacture.

In summary, in the temperature regulating plate 10 according to the embodiments of this application, through arrangement of the first heat exchange sections 111 and the first transition section 112, the first transition section 112 can communicate with two adjacent first heat exchange sections 111, and the flow area of the first heat exchange section 111 is greater than the flow area of the first transition section 112, so that injection of the heat exchange medium can be reduced, and energy waste can be effectively reduced when the heat exchange medium passes through the first transition section 112, and therefore the energy of the heat exchange medium in the first flow channel 11 can be concentrated in the first heat exchange regions to exchange heat with the battery module 20, energy consumption of the temperature regulating plate 10 is effectively reduced and use costs are lowered.

As shown in FIG. 6, an embodiment of this application further provides a battery pack 100, including the temperature regulating plate 10 and the battery module 20 as described in any foregoing embodiment, where the plurality of first heat exchange regions of the temperature regulating plate 10 cooperate with different heat-generating regions of the battery module 20. Because the temperature regulating plate 10 according to this embodiment of this application can resolve a technical problem of high energy consumption of existing temperature regulating plates, the battery pack 100 of this application also has the foregoing advantage, which can reduce the injection amount of the heat exchange medium, effectively reduce energy consumption, and reduce use costs. Further details will not be described in this embodiment.

According to an embodiment of this application, the battery pack 100 further includes: a frame 30. The frame 30 is disposed on a side of the temperature regulating plate 10 and cooperates with the temperature regulating plate 10 to define an accommodating cavity configured to accommodate the battery module 20.

Specifically, as shown in FIG. 6, the frame 30 having a rectangular structure is disposed on a side of the temperature regulating plate 10, and the temperature regulating plate 10 may be connected to the frame 30 by welding, so that the temperature regulating plate 10 and the frame 30 define the accommodating cavity. The battery module 20 may be disposed in the accommodating cavity, and the battery module 20 may be supported by the temperature regulating plate 10. Compared with the prior art, the temperature regulating plate 10 can serve as a base plate of the battery pack 100, which simplifies a structure of the battery pack 100, saves plate materials, improves a space utilization rate, and facilitates production and assembly of the battery pack 100.

According to an embodiment of this application, as shown in FIG. 1, the battery module 20 includes a plurality of battery cells 23 extending in the first direction X and arranged in a second direction Y. Each battery cell 23 is provided with electrode terminals at two ends in the first direction X, so that first heat-generating regions 21 (the high heat-generating regions 21 in the foregoing embodiments) are formed at two ends of the battery module 20 in the first direction X, and a second heat-generating region 22 (the low heat-generating region 22 in the foregoing embodiments) is formed between the two first heat-generating regions 21. The first heat exchange regions one-to-one to correspond the first heat-generating regions 25 of the battery module 20 for heat exchange. The body 40 is further provided with a second heat exchange region that cooperates with the second heat-generating region 26 of the battery module 20 for heat exchange. The second heat exchange region is located between two adjacent first heat exchange regions 25. The body 40 is provided with a second flow channel 12. The second flow channel 12 is configured to circulate the heat exchange medium. The second flow channel 12 includes a second heat exchange section 121, and the second heat exchange section 121 is disposed in the second heat exchange region, so that energy consumption of the temperature regulating plate 10 is more effectively reduced, which further avoids wasting the energy of the heat exchange medium.

It will be noted that structural strength of the temperature regulating plate 10 can be determined according to actual needs, which will be understood by person skilled in the art, and will not be described in embodiments of this application.

In some implementations of this application, the battery module 20 is provided with a first temperature detection unit at each of two ends in the first direction X. Temperatures at two ends of the battery module 20 in the first direction X can be detected by the first temperature detection units, to adjust temperatures of the first heat exchange sections 111 according to the detected temperatures. The battery module 20 is provided with a second temperature detection unit at a middle portion in the first direction X. A temperature at the middle portion of the battery module 20 in the first direction X can be detected by the second temperature detection unit, to adjust a temperature of the second heat exchange section 121 according to the detected temperature.

In an example of this application, a third temperature detection unit is disposed at the first liquid outlet, to detect a temperature of the heat exchange medium flowing out of the first flow channel 11. A fourth temperature detection unit is disposed at the second liquid outlet, to detect a temperature of the heat exchange medium flowing out of the second flow channel 12.

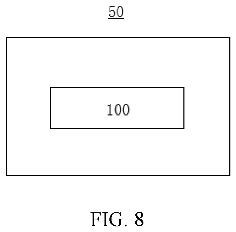

As shown in FIG. 7 and FIG. 8, an embodiment of this application further provides an electric device 50. The electric device 50 may be a vehicle or other device. The electric device 50 includes the temperature regulating plate 10 or the battery pack 100 described in any foregoing embodiment. Because both the temperature regulating plate 10 and the battery pack 100 according to the embodiments of this application can resolve the technical problem of high energy consumption of existing temperature regulating plates, the electric device 50 of this application also has the foregoing advantage, which can reduce an injection amount of the heat exchange medium, effectively reduce energy consumption, and reduce use costs. Further details will not be described in this embodiment.

Although some specific embodiments of this application have been described in detail by using examples, person skilled in the art will understand that the foregoing examples are merely for description, but are not intended to limit the scope of this application. Person skilled in the art will understand that modifications may be made to the foregoing embodiments without departing from the scope and spirit of this application. The scope of this application is limited by the appended claims.

## Claims

1. A temperature regulating plate (10), comprising:
a body (40), the body (40) being provided with a plurality of first heat exchange regions configured to cooperate with different heat-generating regions of a battery module (20), the body (40) is provided with a first flow channel (11), the first flow channel (11) is configured to circulate a heat exchange medium, and the first flow channel (11) comprises a plurality of first heat exchange sections (111) and at least one first transition section (112); and wherein
the first heat exchange sections (111) are disposed in the first heat exchange regions, the first transition section (112) is disposed between the first heat exchange sections (111) of two adjacent first heat exchange regions to communicate with the first heat exchange sections (111), and a flow area of the first heat exchange section (111) in any first heat exchange region is greater than a flow area of any first transition sections (112).

2. The temperature regulating plate (10) according to claim 1, wherein the first heat exchange section (111) comprises:
a plurality of first heat exchange sub-sections (111a), wherein the first heat exchange sub-sections (111a) of two adjacent first heat exchange regions are in communication through the first transition section (112), and a total flow area of the plurality of first heat exchange sub-sections (111a) in any first heat exchange region is greater than the flow area of any first transition section (112).

3. The temperature regulating plate (10) according to claim 2, wherein the first transition section (112) comprises:
a plurality of first transition sub-sections (112a), the first heat exchange sections (111) of two adjacent first heat exchange regions are in communication through the plurality of first transition sub-sections (112a), and the flow area of the first heat exchange section (111) in any first heat exchange region is greater than a total flow area of the plurality of first transition sub-sections (112a).

4. The temperature regulating plate (10) according to claim 3, wherein spacing between two adjacent first transition sub-sections (112a) is less than spacing between two adjacent first heat exchange sub-sections (111a); and/or
a quantity of the first transition sub-sections (112a) is less than a quantity of the first heat exchange sub-sections (111a).

5. The temperature regulating plate (10) according to any one of claims 1 to 4, wherein the body (40) is provided with a second heat exchange region configured to cooperate with different heat-generating regions of the battery module (20), the second heat exchange region is located between two adjacent first heat exchange regions, the body (40) is provided with a second flow channel (12), the second flow channel (12) is configured to circulate a heat exchange medium, the second flow channel (12) comprises a second heat exchange section (121), and the second heat exchange section (121) is disposed in the second heat exchange region.

6. The temperature regulating plate (10) according to claim 5, wherein the body (40) is provided with a plurality of second heat exchange regions, the first heat exchange region separates adjacent second heat exchange regions, and the second flow channel (12) comprises a plurality of second heat exchange sections (121) and at least one second transition section (122); and wherein
the second transition section (122) is disposed between the second heat exchange sections (121) of two adjacent second heat exchange regions to communicate with the second heat exchange sections (121), and a flow area of the second heat exchange section (121) in any second heat exchange region is greater than a flow area of any second transition section (122).

7. The temperature regulating plate (10) according to claim 6, wherein the second heat exchange section (121) comprises:
a plurality of second heat exchange sub-sections (121a), wherein the second heat exchange sub-sections (121a) of two adjacent second heat exchange regions are in communication through the second transition section (122), and a total flow area of the plurality of second heat exchange sub-sections (121a) in any second heat exchange region is greater than the flow area of any second transition section (122).

8. The temperature regulating plate (10) according to claim 7, wherein the second transition section (122) comprises:
a plurality of second transition sub-sections (122a), the second heat exchange sections (121) of two adjacent second heat exchange regions are in communication through the plurality of second transition sub-sections (122a), and the flow area of the second heat exchange section (121) in any second heat exchange region is greater than a total flow area of the plurality of second transition sub-sections (122a).

9. The temperature regulating plate (10) according to claim 8, wherein spacing between two adjacent second transition sub-sections (122a) is less than spacing between two adjacent second heat exchange sub-sections (121a); and/or
a quantity of the second transition sub-sections (122a) is less than a quantity of the second heat exchange sub-sections (121a).

10. The temperature regulating plate (10) according to any one of claims 5 to 9, wherein the body (40) comprises:
a first plate body (13); and
a second plate body (14), wherein a side of the second plate body (14) is provided with a groove, the second plate body (14) is disposed on the first plate body (13), and the groove cooperates with the first plate body (13) to define the first flow channel (11) and the second flow channel (12).

11. A battery pack (100), comprising:
the temperature regulating plate (10) according to any one of claims 1 to 10; and
a battery module (20), the plurality of first heat exchange regions cooperating with different heat-generating regions of the battery module (20).

12. The battery pack (100) according to claim 11, further comprising:
a frame (30), the frame (30) is disposed on a side of the temperature regulating plate (10) and cooperates with the temperature regulating plate (10) to define an accommodating cavity configured to accommodate the battery module (20).

13. The battery pack (100) according to claim 11, wherein the battery module (20) comprises a plurality of battery cells (23) extending in a first direction and arranged in a second direction, and each battery cell (23) is provided with electrode terminals at two ends in the first direction, to form first heat-generating regions (21) at two ends of the battery module (20) in the first direction, and form a second heat-generating region (22) between two first heat-generating regions (21); and
the first heat exchange regions one-to-one correspond to and cooperate with the first heat-generating regions (25) of the battery module (20) for heat exchange, the body (40) is further provided with a second heat exchange region cooperating with the second heat-generating region (26) of the battery module (20) for heat exchange, the second heat exchange region is located between two adjacent first heat exchange regions (25), the body (40) is provided with a second flow channel (12), the second flow channel (12) is configured to circulate a heat exchange medium, the second flow channel (12) comprises a second heat exchange section (121), and the second heat exchange section (121) is disposed in the second heat exchange region.

14. An electric device (50), comprising the temperature regulating plate (10) according to any one of claims 1 to 13, or the battery pack (100) according to claim 11 or 12.
